# FASCICULE DE BREVET EUROPEEN

(11) **EP 1 070 884 B1**
(45) Date de publication et mention de la délivrance du brevet: **18.12.2002**
(21) Numéro de dépôt: 00401723.2
(22) Date de dépôt: 16.06.2000
(51) Int. Cl.: F16H 61/28, F16H 63/18

(54) **Dispositif de commande interne de changement de vitesse pour boite de vitesse mécanique d'un véhicule automobile**
Schaltvorrichtung für ein mechanisches Wechselgetriebe eines Kraftfahrzeugs
Shifting device for mechanical gearbox of a motor vehicle

(30) Priorité: 22.07.1999 FR 9909505
(43) Date de publication de la demande: 24.01.2001
(73) Titulaire: Peugeot Citroen Automobiles SA, 92200 Neuilly sur Seine (FR)
(72) Inventeur: Lelasseux, Xavier, 92150 Suresnes (FR); Pelletier, Laurent, 95000 Cergy st Christophe (FR)
(74) Mandataire: Seytre, Françoise

(56) Documents cités:
- EP-A- 0 741 258
- EP-A- 0 849 508

## Description

La présente invention concerne un dispositif de commande interne de changement de vitesse pour boîte de vitesses mécanique d'un véhicule automobile selon le préambule de la revendication est connu du document EP-A-741258.

Elle se rapporte plus particulièrement à un dispositif de commande ou de pilotage interne du changement de vitesse du type désigné à barillet ou à cylindre à cames pour boîte de vitesses destiné à permettre le passage des vitesses de manière séquentielle, c'est-à-dire en montant chaque rapport dans leur ordre numérique ou en descendant les rapports de vitesses déjà engagés dans leur ordre numérique inverse.

On connaît déjà un dispositif de commande interne à barillet de changement de vitesses pour boîte de vitesses mécanique qui est constitué d'un cylindre ou tambour comportant une rampe pour chaque fourchette afin de déplacer alternativement dans le sens axial ces dernières. Chacune des fourchettes est montée coulissante sur un axe unique et coopère d'une part avec un organe d'actionnement d'un synchroniseur de marche avant destiné à engager le rapport désiré et d'autre part avec la rampe associée par l'intermédiaire d'un carré mâle qui reçoit une pièce de frottement en forme de cylindre venant s'inscrire dans la rampe. Le tambour est entraîné en rotation dans un sens ou dans l'autre par l'intermédiaire d'un moteur électrique fixé au carter de boîte de vitesses.

L'invention a pour but de proposer un autre dispositif que celui décrit ci-dessus qui soit plus compacte et simple de réalisation et de fonctionnement.

A cet effet, l'invention a pour objet un dispositif de commande interne de changement de vitesse pour boîte de vitesses mécanique d'un véhicule automobile selon les caractéristiques de la revendication 1.

Suivant quelques dispositions intéressantes de l'invention :
- chacun des organes d'engagement d'au moins un rapport est monté coaxialement coulissant sur l'arbre de commande portant le cylindre,
- les doigts de commande des organes d'engagements sont répartis angulairement autour de la douille de manière à assurer que les fourchettes soient à tout moment positionnées soit en position point mort ou enclenchées sur un rapport unique,
- les moyens de sélection sont constitués de deux ergots espacés l'un de l'autre et agencés dans un même plan longitudinal,
- selon une variante, les moyens de sélection sont constitués d'un unique ergot apte à s'engager successivement dans une pièce en forme de « U » qui est solidaire respectivement d'un organe d'engagement d'un rapport,
- la douille est pourvue sur sa périphérie d'un secteur angulaire muni de dents d'engrenage qui sont destinés à engrener avec un pignon solidaire d'un arbre intermédiaire parallèle à l'arbre de commande, le secteur angulaire le pignon formant un premier train d'engrenage,
- l'arbre de commande et l'arbre intermédiaire sont munis à l'une de leurs extrémités libres respectivement d'un pignon, ces pignons formant un second train d'engrenage qui est mus en rotation par l'intermédiaire des moyens d'entraînements,
- le rapport de démultiplication entre le premier train et le second train d'engrenage est déterminé de telle sorte que la rotation d'un tour de l'arbre intermédiaire permet d'effectuer autant de tour de rotation à l'arbre de commande qu'il y a d'organes d'engagement de rapport et à la douille la rotation nécessaire pour sélectionner ces organes d'engagement,
- la rampe est réalisée sur le cylindre de telle sorte que l'angle α formé entre une droite perpendiculaire à l'arbre de commande et une tangente passant par le rayon de courbure de la rampe forme un angle compris entre 20 et 64 degrés, de préférence un angle inférieur à 45 degrés,
- les moyens d'entraînements en rotation de l'arbre de commande sont constitués d'un moteur électrique du type pas à pas,
- le cylindre est constitué de deux parties distinctes et séparables formant une fois assemblées une rainure aux flancs parallèles,
- l'une des parties constituant le cylindre est pourvu d'un ergot qui est destiné à coopérer en position d'assemblage avec une rainure réalisée sur l'autre partie.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue partielle du dispositif de commande interne de changement de vitesse pour une boite de vitesses selon la présente invention,
- la figure 2 est une vue en perspective du dispositif selon la présente invention, sur lequel est agencé un organe d'engagement supplémentaire pour la marche arrière,
- la figure 3 est une vue à plus grande échelle, en perspective, de la douille de commande des organes d'engagement, et
- la figure 4 est une vue en perspective du cylindre du dispositif de commande selon l'invention

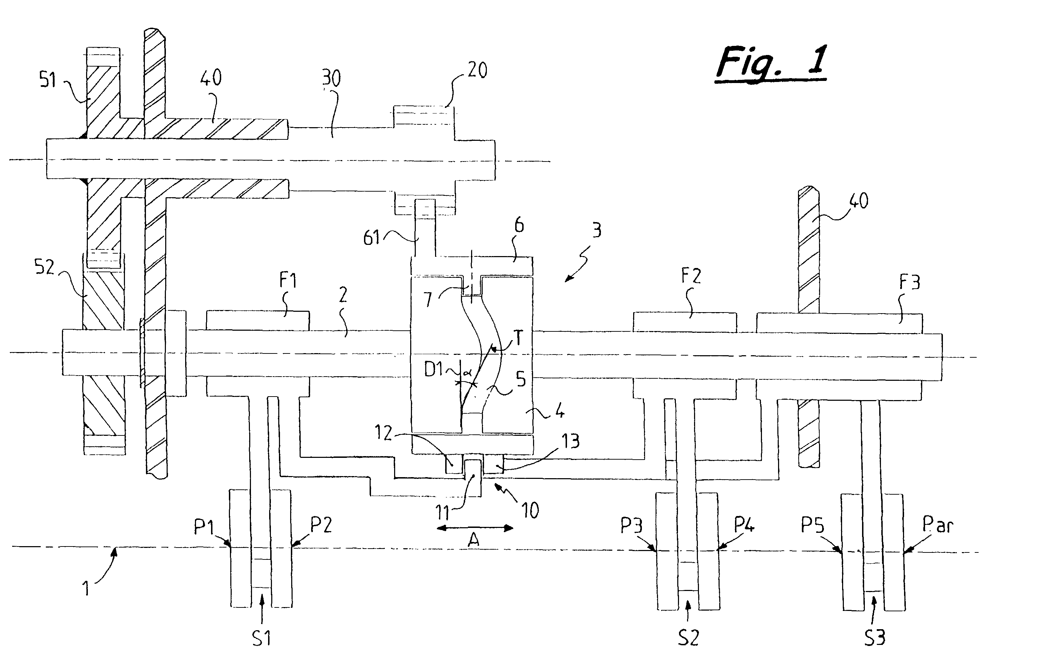

On a représenté à la figure 1, l'axe géométrique, désigné par la référence générale 1, des arbres primaire ou secondaire d'une boite de vitesses mécanique sur lequel sont montés des organes d'actionnement S1, S2 et S3 d'un synchroniseur ou de crabots de marche avant et/ou de marche arrière.

Dans notre mode de réalisation, l'arbre secondaire est pourvu de trois organes d'actionnement S1, S2 et S3 d'un synchroniseur ou de crabots correspondant respectivement en considérant la figure et de gauche à droite, au synchroniseur du rapport de la première P1 et seconde P2 vitesse, du rapport de troisième P3 et de quatrième P4 vitesse et du rapport de cinquième P5 et de marche arrière P.ar.

Chacun de ces trois organes d'actionnement S1, S2 et S3 d'un synchroniseur est associé à un organe d'engagement d'un rapport ou fourchette, désigné respectivement F1, F2 et F3, qui est apte à se déplacer dans un sens axial, représenté par la flèche A, sur un arbre parallèle 2 et déporté par rapport à l'arbre primaire. Le déplacement suivant le sens axial des organes d'engagement F1, F2 et F3 d'un rapport est réalisé par l'intermédiaire d'un dispositif interne 3 du type à cylindre ou barillet 4.

Selon la présente invention, le dispositif interne 3 est constitué d'une part d'un cylindre 4 porté par l'arbre 2, désigné arbre de commande, muni d'une rampe 5 et d'autre part d'une douille 6 monté coaxialement coulissant sur le cylindre 4 par l'intermédiaire d'un pion 7 solidaire de la douille qui coopère avec la rainure 5.

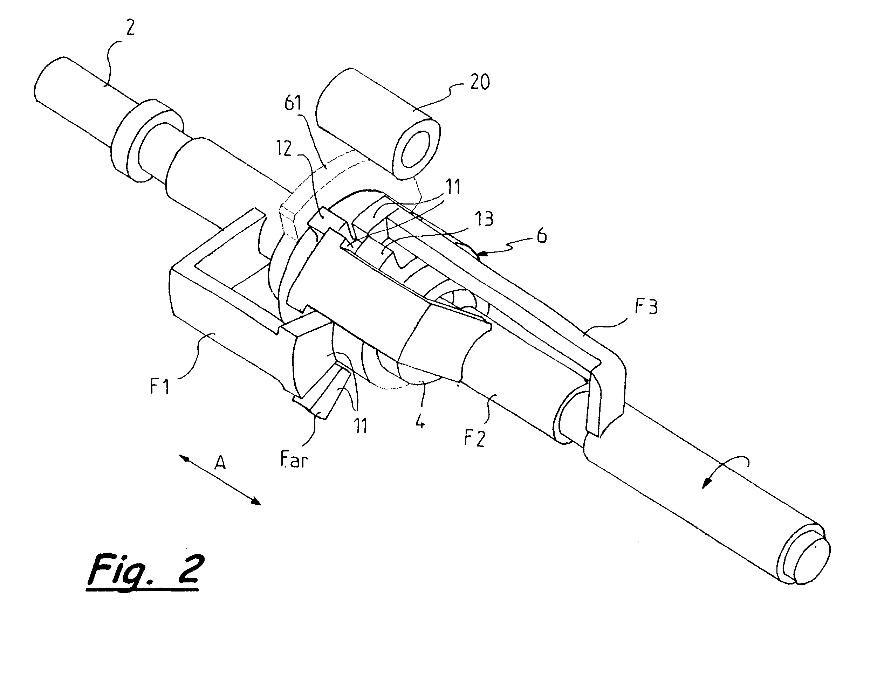

La douille 6 comporte sur sa périphérie extérieure des moyens de sélection 10 des différents organes d'engagement d'un rapport et plus particulièrement d'un doigt 11 associé à chacun des organes qui est répartie angulairement autour de la douille 6, comme visible sur la figure 2.

Sur cette figure 2, un organe d'engagement supplémentaire F.ar à été rajouté afin d'engager le rapport de marche arrière.

Les moyens de sélection 10 sont constitués avantageusement, de deux ergots 12 et 13 espacés l'un de l'autre et agencés dans un même plan longitudinal, comme visible aux figures 1, 2 et 3.

Selon une variante, non représenté, les moyens de sélection 10 sont constitués d'un unique ergot apte à s'engager successivement dans des pièces en forme de « U » qui sont solidaires respectivement d'un organe d'engagement d'un rapport.

La douille 6 est pourvue également sur sa périphérie d'un secteur angulaire 61 munie de cannelures qui est destiné à engrener avec un pignon 20 solidaire d'un arbre intermédiaire 30 parallèle à l'arbre de commande 2.

Cet arbre intermédiaire 30 et l'arbre de commande 2 sont montés en rotation dans le carter de la boîte de vitesses, désigné par la référence générale 40 et sont munis à l'une de leurs extrémités libres respectivement d'un pignon 51 et 52. Ces deux pignons 51 et 52 engrènent ensemble et sont mus en rotation par l'intermédiaire d'un moyen d'entraînement, non représenté.

On notera que le rapport de démultiplication des deux trains d'engrenage, constitué respectivement des pignons 51, 52 et 61, 20 est déterminé de telle sorte que la rotation d'un tour de l'arbre intermédiaire 30 permet d'effectuer autant de tour de rotation à l'arbre de commande 2 qu'il y a d'organes d'engagement de rapport et à la douille la rotation nécessaire pour sélectionner ces organes d'engagement.

Le moyen d'entraînement est constitué d'un moteur électrique du type pas à pas, qui est avantageusement fixé au carter 40 de la boîte de vitesses.

Selon une variante de réalisation, ce moteur électrique peut être remplacé par un moyen mécanique du type à cliquet, bien connu de l'homme du métier.

Le fonctionnement du dispositif de la présente invention découle de la description ci-dessus.

En effet, on comprend que lors de la mise en rotation du train d'engrenage 51, 52 par le moyen d'entraînement, ceci a pour conséquence de faire tourner l'arbre de commande 2 et l'arbre intermédiaire 30 à des vitesses différentes.

Le cylindre 4 solidaire de l'arbre de commande 2 est alors entraîné en rotation ce qui provoque le déplacement axial d'un des organes d'engagement F1 ou F2 ou F3 d'un rapport par l'intermédiaire de la coopération de la rampe 5 ou rainure avec le pion 7 de la douille 6.

On notera qu'avantageusement, la rampe 5 est réalisée sur le cylindre 4 de telle sorte que l'angle α formé entre une droite D1 perpendiculaire à l'arbre de commande 2 et la tangente T passant par le rayon de courbure de la rampe forme un angle compris entre 20 et 64 degrés, de préférence un angle inférieur à 45 degrés afin d'assurer un bon rendement de la liaison avec le doigt et ne pas générer d'effort de rotation de la fourchette important.

Le déplacement de la fourchette entraîne préalablement la mise en friction des éléments de l'organe de synchronisation S1 ou S2 ou S3 puis le passage du rapport.

Le deuxième train d'engrenage constitué par les pignons 61 et 20, permet lors de la rotation du cylindre de déplacer angulairement la douille de telle sorte qu'au tour suivant de l'arbre de commande 2, le moyen de sélection de l'organe d'engagement soit positionné sur le doigt de la fourchette suivante.

Avantageusement, on notera qu'un tour complet de rotation du barillet ou cylindre 4 permet de commander successivement en translation les deux rapports par exemple P1, P2 ; ou P3, P4 de l'organe d'actionnement par exemple S1, S2 sélectionné.

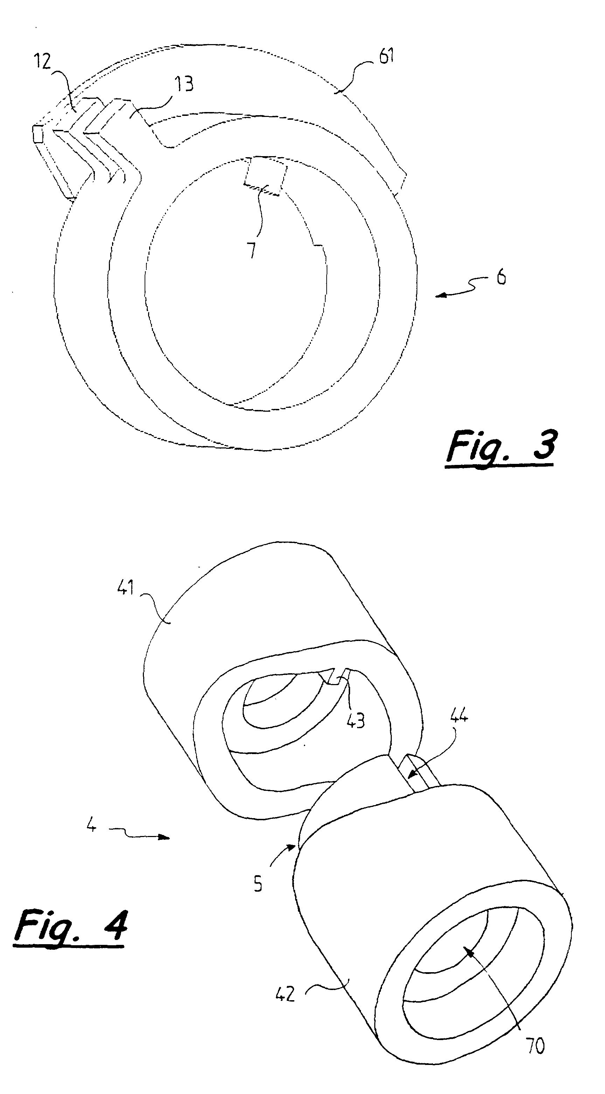

On a représenté à la figure 4, une représentation à plus grande échelle et en perspective d'un cylindre ou barillet 4 qui est constitué de deux parties distinctes et séparables, désignées par les références générales 41 et 42.

Chacune des parties 41 et 42 est réalisée par exemple par moulage ou frittage et est muni d'un orifice central 70 destiné à recevoir l'arbre de commande 2. Les deux parties 41 et 42 sont accouplées l'une à l'autre par le mécanisme d'un jeu de forme complémentaire, par exemple partie femelle 41 et partie mâle 42, comme visible sur la figure 4. Afin d'assurer le parallélisme et l'égalité des distances entre les deux parties sur leur pourtour, un indexage angulaire de l'une des parties par rapport à l'autre est réalisé par l'intermédiaire d'au moins un ergot 43 solidaire de l'une de la partie femelle destinée à s'engager dans une rainure 44 longitudinale réalisée sur la partie male.

Les parties 41 et 42 forment une fois assemblées une rainure 5 aux flancs parallèles

On comprend à la lecture de la description ci-dessus que le dispositif interne de changement de vitesse selon la présente invention permet d'avoir un dispositif compact, et simple à réaliser.

## Revendications

1. Dispositif de commande interne de changement de vitesse pour boîte de vitesses mécanique d'un véhicule automobile, constitué d'un cylindre (4) solidaire d'un arbre de commande (2) mis en rotation par des moyens d'entraînements, le cylindre (4) étant muni d'une rampe (5) en forme de rainure, **caractérisé en ce qu'**une douille (6) est monté coaxialement coulissant sur ledit cylindre (4) par l'intermédiaire d'un pion (7) solidaire de la douille (6) qui coopère avec la rainure (5) et **en ce que** la douille (6) comporte sur sa périphérie extérieure des moyens de sélection (10) des différents organes d'engagement (F1 ; F2 ; F3) d'un rapport, les moyens de sélections (10) étant mus en rotation par un premier train d'engrenage (61, 20) qui est relié aux moyens d'entrainements.

2. Dispositif selon la revendication 1, **caractérisé en ce que** chacun des organes d'engagement d'au moins un rapport est monté coaxialement coulissant sur l'arbre de commande (2) portant le cylindre (4).

3. Dispositif selon l'un des revendications précédentes, **caractérisé en ce que** les doigts de commande (11) des organes d'engagements (F1, F2, F3) sont répartis angulairement autour de la douille (6) de manière à assurer que les fourchettes soient à tout moment positionnées soit en position point mort ou enclenchées sur un rapport unique.

4. Dispositif selon l'une des revendications précédentes, **caractérisé en ce que** les moyens de sélection (10) sont constitués de deux ergots (12 et 13) espacés l'un de l'autre et agencés dans un même plan longitudinal.

5. Dispositif selon l'une des revendications 1 à 3, **caractérisé en ce que** les moyens de sélection (10) sont constitués d'un unique ergot apte à s'engager successivement dans une pièce en forme de « U » qui est solidaire respectivement d'un organe d'engagement d'un rapport.

6. Dispositif selon l'une des revendications précédentes, **caractérisé en ce que** la douille (6) est pourvue sur sa périphérie d'un secteur angulaire (61) munie de cannelures qui est destiné à engrener avec un pignon (20) solidaire d'un arbre intermédiaire (30) parallèle à l'arbre de commande (2), le secteur angulaire (61) et le pignon (20) formant ledit premier train d'engrenage.

7. Dispositif selon la revendication 6, **caractérisé en ce que** l'arbre de commande (2) et l'arbre intermédiaire (30) sont munis à l'une de leurs extrémités libres respectivement d'un pignon (51 et 52), ces pignons formant un second train d'engrenage qui est mus en rotation par l'intermédiaire des moyens d'entraînements.

8. Dispositif selon la revendication 7, **caractérisé en ce que** le rapport de démultiplication entre le premier train et le second train d'engrenage est déterminé de telle sorte que la rotation d'un tour de l'arbre intermédiaire (30) permet d'effectuer autant de tour de rotation à l'arbre de commande (2) qu'il y a d'organes d'engagement de rapport et à la douille (6) la rotation nécessaire pour sélectionner ces organes d'engagement.

9. Dispositif selon l'une quelconque des revendications précédentes, **caractérisé en ce que** la rampe (5) est réalisée sur le cylindre (4) de telle sorte que l'angle α formé entre une droite (D1) perpendiculaire à l'arbre de commande (2) et une tangente (T) passant par le rayon de courbure de la rampe (5) forme un angle compris entre 20 et 64 degrés, de préférence un angle inférieur à 45 degrés.

10. Dispositif selon l'une quelconque des revendications précédentes, **caractérisé en ce que** les moyens d'entraînements en rotation de l'arbre de commande (2) sont constitués d'un moteur électrique du type pas à pas.

11. Dispositif selon l'une quelconque des revendications précédentes, **caractérisé en ce que** le cylindre (4) est constitué de deux parties distinctes et séparables (41, 42) formant une fois assemblées ladite rainure (5) aux flancs parallèles.

12. Dispositif selon la revendication 11, **caractérisé en ce que** l'une des parties constituant le cylindre (4) est pourvu d'un ergot (43) qui est destiné à coopérer en position d'assemblage avec une rainure (44) réalisée sur l'autre partie.

## Claims

1. Internal control device for changing gear, for a mechanical gear box of a motor vehicle, constituted by a cylinder (4) integral with a drive shaft (2) set in rotation by driving means, the cylinder (4) being provided with a slot-shaped ramp (5), **characterised in that** a socket (6) is mounted coaxially and sliding over said cylinder (4) by the intermediary of a pin (7) integral with the socket (6), which co-operates with the slot (5) and **in that** the socket (6) has, on its outer periphery, means (10) for selecting the various engagement members (F1; F2; F3) of a gear, the selection means (10) being moved in rotation by a first train of gears (61, 20), which is connected to the driving means.

2. Device according to Claim 1, **characterised in that** each of the engagement members of at least one gear is mounted coaxially and sliding on the drive shaft (2) carrying the cylinder (4).

3. Device according to one of the preceding claims, **characterised in that** the control fingers (11) of the engagement members (F1, F2, F3) are angularly distributed about the socket (6) so as to ensure that the forks are constantly positioned either in dead centre position or engaged with a single gear.

4. Device according to one of the preceding claims, **characterised in that** the selection means (10) are constituted by two lugs (12 and 13) spaced out from one another and arranged in the same longitudinal plane.

5. Device according to one of Claims 1 to 3, **characterised in that** the selection means (10) are constituted by a single lug suitable for being engaged successively in a U-shaped part that is integral respectively with an engagement member of a gear.

6. Device according to one of the preceding claims, **characterised in that** the socket (6) is provided on its periphery with an angular sector (61) provided with grooves, which is intended to mesh with a pinion (20) integral with a countershaft (30) parallel to the drive shaft (2), the angular sector (61) and the pinion (20) forming said first train of gears.

7. Device according to Claim 6, **characterised in that** the drive shaft (2) and the countershaft (30) are provided at one of their free ends respectively with a pinion (51 and 52), these pinions forming a second train of gears that is moved in rotation by the intermediary of the driving means.

8. Device according to Claim 7, **characterised in that** the gear ratio between the first train and the second train of gears is determined in such a way that rotating the countershaft (30) by one turn makes it possible to carry out the same number of turns of rotation on the drive shaft (2) as there are gear engagement members and, on the socket (6), the rotation necessary for selecting these engagement members.

9. Device according to any one of the preceding claims, **characterised in that** the ramp (5) is made on the cylinder (4) in such a way that the angle α formed between a straight line (D1) perpendicular to the drive shaft (2) and a tangent (T) passing through the radius of curvature of the ramp (5) forms an angle comprised between 20 and 64 degrees, preferably an angle of less than 45 degrees.

10. Device according to any one of the preceding claims, **characterised in that** the means for driving the drive shaft (2) in rotation are constituted by an electric motor of the stepping type.

11. Device according to any one of the preceding claims, **characterised in that** the cylinder (4) is constituted by two distinct and separable parts (41, 42) which, when assembled, form said slot (5) with parallel sides.

12. Device according to Claim 11, **characterised in that** one of the parts constituting the cylinder (4) is provided with a lug (43) that is intended to cooperate in the assembly position with a slot (44) made on the other part.

## Patentansprüche

1. Innere Steuervorrichtung für den Gangwechsel eines mechanischen Getriebegehäuses eines Kraftfahrzeugs, die aus einem Zylinder (4) besteht, der fest mit einer Steuerwelle (2) verbunden ist, die durch Mitnahmeeinrichtungen in Rotation versetzt wurde, wobei der Zylinder eine Steigung (5) in Form einer Nut aufweist,
**dadurch gekennzeichnet, daß**
eine Hülse koaxial gleitend auf dem Zylinder (4) mit einem Stift (7) angeordnet ist, der fest mit der Hülse (6) verbunden ist und der mit der Nut (5) zusammenwirkt, und daß die Hülse (6) am Außenumfang Auswahleinrichtungen (10) der unterschiedlichen Eingriffsorgane (F1, F2, F3) eines Ganges aufweist, wobei die Auswahleinrichtungen (10) durch einen ersten mit den Mitnahmevorrichtungen verbundenen Zahnradzug (61/20) in Rotation versetzt wird.

2. Vorrichtung nach Anspruch 1, **dadurch gekennzeichnet, daß** jedes Eingriffsorgan von mindestens einem Gang koaxial gleitend auf der Steuerwelle (2) angeordnet ist, die den Zylinder (4) trägt.

3. Vorrichtung nach einem der vorstehenden Ansprüche, **dadurch gekennzeichnet, daß** die Steuerfinger (11) der Eingriffsorgane (F1, F2, F3) im Winkel so um die Hülse (6) verteilt sind, daß sichergestellt wird, das die Gabeln in jedem Moment entweder in Leerlaufstellung liegen, oder mit einem einzelnen Gang in Eingriff stehen.

4. Vorrichtung nach einem der vorstehenden Ansprüche, **dadurch gekennzeichnet, daß** die Auswahleinrichtungen (10) aus zwei Vorsprüngen (12 und 13) bestehen, die beabstandet zueinander in der gleichen Längsebene angeordnet sind.

5. Vorrichtung nach einem der Ansprüche 1 bis 3, **dadurch gekennzeichnet, daß** die Auswahleinrichtungen (10) aus einem einzelnen Vorsprung bestehen, der nacheinander in ein U-förmiges Teil eingreifen kann, das jeweils fest mit einem Eingriffsorgan eines Ganges verbunden ist.

6. Vorrichtung nach einem der vorstehenden Ansprüche, **dadurch gekennzeichnet, daß** die Hülse (6) auf ihrem Umfang einen Winkelabschnitt (61) mit Riffelungen aufweist, der mit einem Ritzel (20) in Eingriff steht, das fest mit einer Zwischenwelle (30) parallel zur Steuerwelle (2) verbunden ist, wobei der Winkelabschnitt (61) und das Ritzel (20) den ersten Zahnradzug bilden.

7. Vorrichtung nach Anspruch 6, **dadurch gekennzeichnet, daß** die Steuerwelle (2) und die Zwischenwelle (3) an einem ihrer freien Enden jeweils mit einem Ritzel (51 und 52) verbunden sind, die einen zweiten Zahnradzug bilden, der durch die Mitnahmeeinrichtungen in Rotation versetzt wird.

8. Vorrichtung nach Anspruch 7, **dadurch gekennzeichnet, daß** der Untersetzungszusammenhang zwischen dem ersten Zahnradzug und dem zweiten Zug so festgelegt wird, daß eine Umdrehung der Zwischenwelle (30) dazu führt, daß die Steuerwelle (2) sich soviel dreht, wie Gangeingriffsorgane vorhanden sind, und daß die Hülse (6) die notwendige Umdrehung durchführt, um diese Eingriffsorgane auszuwählen.

9. Vorrichtung nach einem der vorstehenden Ansprüche, **dadurch gekennzeichnet, daß** die Steigung (5) auf dem Zylinder (4) so ausgeführt ist, daß der Winkel α zwischen einer Gerade (D1) senkrecht zur Steuerwelle (2) und einer Tangente (T) durch den Krümmungswinkel der Steigung (5) einen Winkel bildet, der zwischen 20° und 64° liegt, vorzugsweise einen Winkel kleiner 45°.

10. Vorrichtung nach einem der vorstehenden Ansprüche, **dadurch gekennzeichnet, daß** die Mitnahmeeinrichtungen für die Rotation der Steuerwelle (2) aus einem elektrischen Schrittmotor bestehen.

11. Vorrichtung nach einem der vorstehenden Ansprüche, **dadurch gekennzeichnet, daß** der Zylinder (4) aus zwei Einzelteilen besteht die trennbar sind (41, 42), die im zusammengesetzten Zustand die Nut (5) mit parallelen Flanken bilden.

12. Vorrichtung nach Anspruch 11, **dadurch gekennzeichnet, daß** einer der Teile, die den Zylinder (4) bilden, einen Vorsprung (43) aufweist, der in der zusammengesetzten Position mit einer Rille (44) zusammenwirkt, die auf dem anderen Teil ausgebildet ist.
